Europäisches Patentamt

European Patent Office

Office européen des brevets

(11) Publication number: **0 425 742 A1**

## EUROPEAN PATENT APPLICATION

(21) Application number: **89311309.2**

(22) Date of filing: **01.11.89**

(51) Int. Cl.5: **B29C 41/40, B29C 41/14**

The title of the invention has been amended (Guidelines for Examination in the EPO, A-III, 7.3).

(43) Date of publication of application:
**08.05.91 Bulletin 91/19**

(84) Designated Contracting States:
**BE DE FR GB**

(71) Applicant: **BAXTER INTERNATIONAL INC.**
**One Baxter Parkway**
**Deerfield, IL 60015(US)**

(72) Inventor: **Dutchik, Robert A.**
**23947 Arroyo Park Drive Unit 180**
**Valencia, CA 91355(US)**

(74) Representative: **MacGregor, Gordon et al**
**ERIC POTTER & CLARKSON St. Mary's Court**
**St. Mary's Gate**
**Nottingham, NG1 1LE(GB)**

(54) **Glove form.**

(57) A glove form (10) that has an approximately uniform profile that is thinner than conventional forms. The glove form also has a thinner profile (26) adjacent the base of each digit (12-20) and on the sides of the form (39) adjacent the wrist. The glove has a flat front (48) and back and a side portion connecting the front to the back. The side portion is contoured adjacent the base of the digits and on the sides of the glove adjacent the wrist.

FIG. 5

EP 0 425 742 A1

# GLOVE AND FORM FOR MAKING SAME

## Background of the Invention

This invention relates a form for making an elastomeric glove and the glove produced by the form.

For many years gloves have been manufactured for medical and other applications by dipping a hand-shaped form into a tank of elastomeric liquid such as latex. The dipped form is then immersed in a water trough to remove water soluble impurities. Following this, the form is placed in an oven to dry and cure the glove. Once the glove is cured, it is removed from the form. This is typically a hand operation. This process of glove production is most often performed using a continuous or intermittent style conveyor for transporting the glove forms.

The process of transporting and dipping the forms at a rate suitable for production often leads to air entrapment at various places on the form, especially at the tips of the digits and at the crotch area between the digits. This trapped air can cause voids in the formed film that result in weak or thin areas on the finished glove. It has been found that the likelihood of air entrapment increases as the profile of the form leading edges become broad or blunt. It is important to design the form profile to minimize air entrapment. Most conventional porcelain forms have a broad leading edge. The nature of porcelain manufacturing can also create an irregular surface on the form, which may increase the potential for air entrapment.

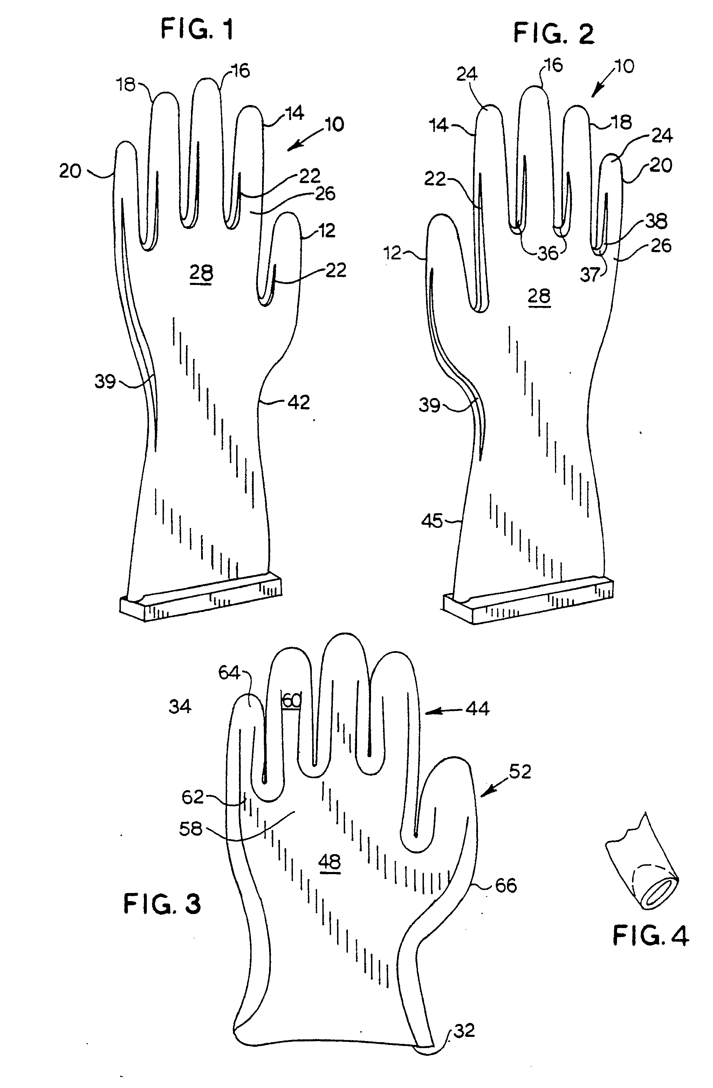

In removing the glove from the form, the glove is typically grasped at the cuff end and pulled away from the form. This action causes the glove to reverse during removal. Since the elastomeric material tightens when it is cured, the glove tends to adhere to the form and to be difficult to remove. As a result, the finger tips of the glove may not be fully reversed, as shown in FIG. 4. While this does not create a problem with the use of the glove, it is undesirable from an aesthetic viewpoint.

Recently the use of gloves in the medical area has increased substantially because of the increased awareness of the spread of contagious diseases through contaminated body fluid. The market demand has increased faster than the capability of manufacturers to supply the products. It has become extremely important to maximize the production of all existing manufacturing facilities. The conventional glove forms are approximately the same size as the human hand that will wear the glove. If the thickness of the profile could be reduced, more forms could be used on existing conveyor systems. The capacity of existing facilities would be increased quickly and at a reasonable cost. Conventional porcelain forms have insulating properties that require high oven temperatures and longer dwell time to effect a proper cure. Thus a thinner profile would create new problems by significantly increasing the heating requirements in existing cure ovens.

The above problems are solved by the form and glove of the present invention.

## Summary of the Invention

The present invention provides a glove and glove form having an approximately uniform profile that is thinner than conventional forms. The form has thinner digit side edges and thinner side peripheral portions. These thinner portions located on the base of each digit, the crotch between the digits and adjacent the wrist. The base of each finger adjoining the palm portion is approximately rectangular in shape with channels at each of the four corners of the finger. Toward the tip of the finger, the rectangular shape with channels blends to an elliptical configuration.

Since the glove is inverted after it is cured on the form, the glove has a shape approximately inverse to that of the form. The glove has a flat front and back connected by a side section, a portion of which is smooth and a portion of which is contoured. The contoured portion is adjacent the base of the digit surfaces and on the contoured sides of the glove from a point below the wearer's wrist to a point adjacent the base of the digit surface.

## Brief Description of the Drawings

FIG. 1 is a perspective view of the front of the glove form that is the subject of this invention.

FIG. 2 is a perspective view of the back of the glove form.

FIG. 3 is a perspective of the glove that is the subject of this invention.

FIG. 4 is a perspective of a fingertip of a glove made by a prior art glove form.

FIG. 5 is a perspective phantom view of a portion of the glove form showing cross sectional views of each of the digits.

FIG. 6 is a cross sectional view of the base of one the digits of the glove form.

FIG. 7 is a cross sectional view of the base of one of the digit pockets of the glove.

FIG. 8. is schematic perspective view of the glove form showing the outline of the form at various cross sections.

FIG. 9 is a top view of the one of the digits of the glove form depicting the change in cross sectional shape.

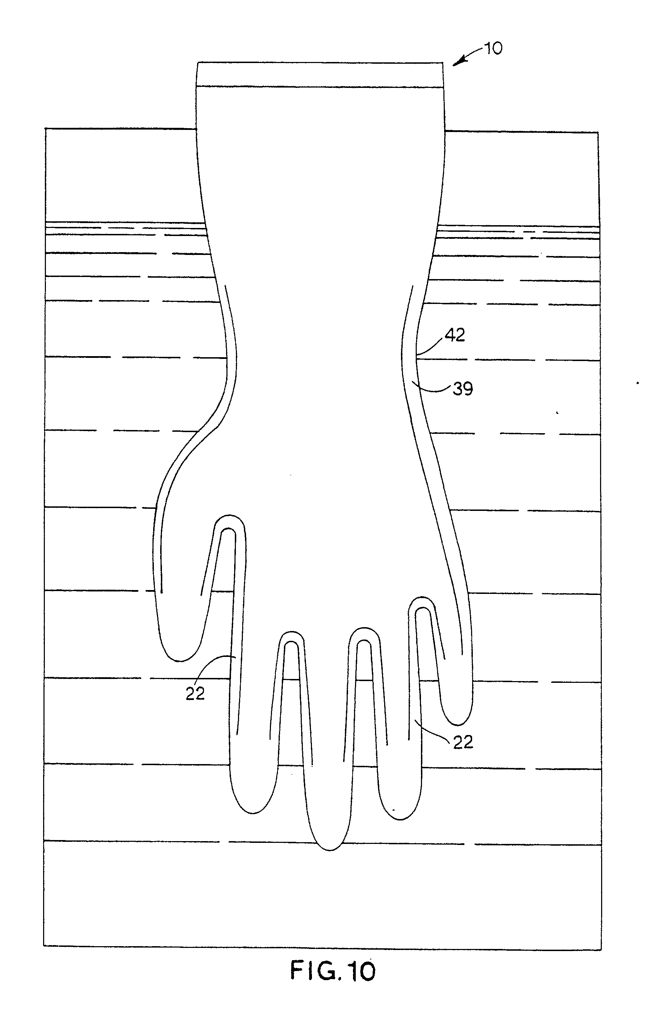

FIG. 10 is a schematic view of the glove form dipped in a vat of elastomeric liquid.

Detailed Description of the Invention

FIGS. 1 and 2 show the front and back, respectively, of the glove form, generally identified as 10, of the present invention. The profile of the form is approximately 1/2 inch, except for the edges that have a reduced thickness, as will be described later. At such thin profiles, a form such as the one described herein may experience excessive warpage if the form has relatively large variations in thickness. The consistency in thickness of the present form greatly reduces the warpage or deflection of the form 10. This is especially important when subjecting the form to the high heat of the cure ovens.

To manufacture a glove of a predetermined size, it is necessary for the surface area of the form to be approximately equal to the size of the hand that will wear the glove. Thus, because the form 10 is thinner than a hand and than a conventional form, the width of the form 10 must be greater than the width of the hand to provide the correct size and fit.

Form digits 12 through 20 each have a digit side edge 22 of reduced thickness. These reduced digit side edges 22 extend from the base 26 of the finger adjacent the palm portion 28 towards the digit tips 24 which are elliptical. Approximately midway between the digit bases 26 and tips 24, the digit profile with the reduced side edges begin to blend into the elliptical shape.

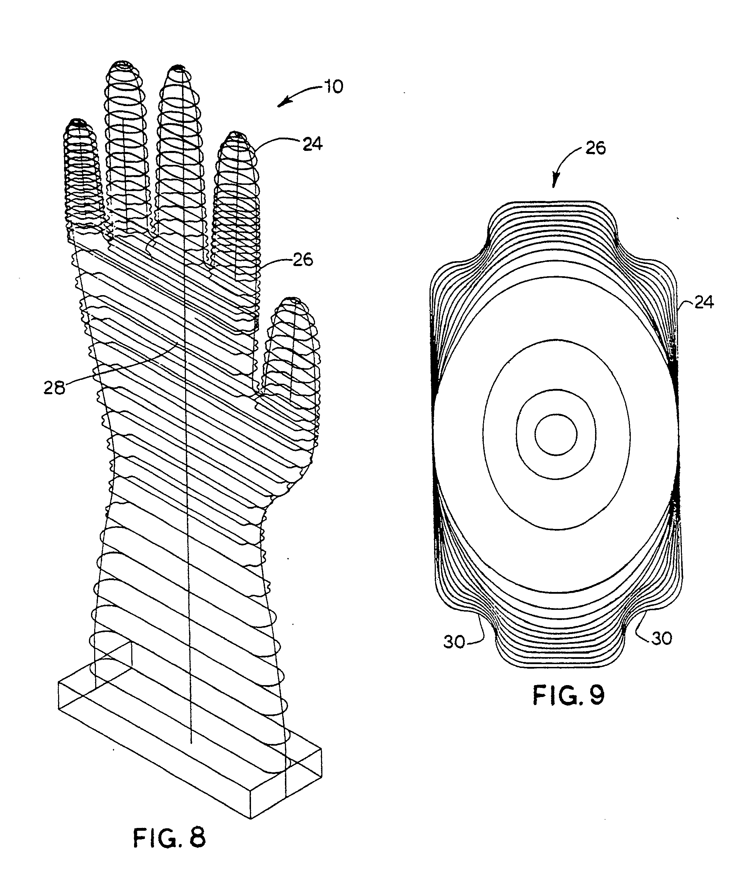

Viewing from the tip 24 of a digit, as shown in FIG. 9, the digit profile is more easily seen. The base 26 is approximately rectangular in shape with concave indentations or digit channels 30 at each of the four corners of the rectangle to form the reduced digit side edges 22. When the form 10 is dipped in the elastomeric liquid, the liquid adheres directly to the form contours. As the glove is cured, the resulting film will tend to pull away from the channels 30, forming a space between the glove and the channel. This space provides a passageway for air when air is introduced under the cuff end 32 of the glove 34.

In a manner similar to the shape of the human hand, the cross section of the glove form 10 is largest at the digit base 26 and smallest at the digit tip 24. The tips of the glove form digits are elliptical and radiused in two directions to reduce the likelihood of air entrapment when the form is dipped into the elastomeric liquid. For the same, reason, the digit crotches 36 are also radiused in two directions. That is, the digit crotch is connected to the palm portion 28 by a radial surface 37 and to the digit base 26 by a radial surface 38. These features have been shown to significantly reduce glove defects.

Because the form tips 24 do not have channels 30, the glove tightly adheres to the form tips 24 when the glove cures. Before the glove is removed from the form 10, a stream of air will be directed between the glove and form, as described earlier. This separates the glove from the form 10 in the area adjacent the digit side channels so that this portion of the glove offers little resistance to being removed from the form. However, the tips of the digit pockets of the gloves tightly adhere to the form. This combination of features allows the glove finger pockets 44 to fully reverse when the glove is pulled from the form 10.

Each side of form 10 also has a thinner side peripheral portion 39. This thinner peripheral portion 39 has a concave side channel 40 on both the front and back of the form. Each side channel begins just below the curve for the wrist 42 and extends upwards to the sides of the outer digits. When the form is dipped into the elastomeric liquid, it is submerged beyond the side channels 40 so that the cuff end is not at the form side channels 40 but is at the radiused side portion 45 of the form. This prevents leech or slurry solution from seeping between the form 10 and the glove 34.

In the same manner as described above, the film separates from the side channels 40 during the curing procedure. The air stream directed between the glove and the form 10 after the curing procedure will help separate the glove form the form to make removal of the glove easier.

The forms 10 are positioned on the continuous conveyor with a side of the glove being the leading edge into the liquid. The side channels 40, while providing for easier glove removal, also provide a thinner frontal surface for dipping thereby decreasing turbulence of the form in the elastomeric liquid. this allows for more even application of the elastomeric liquid. The thin profile of the form 10 also displaces the dipping liquid to a lesser extent than the conventional hollow porcelain forms, making it easier to maintain the proper solution level in the dip tank.

Of more significant importance, the thinner profile allows more forms to be placed on the dipping conveyor. The production of an existing facility can be expanded without incurring significant costs, such as would be incurred with the construction of addition production lines.

Conventional procelain forms, manufactured with a thinner profile, would provide some of the benefits outlined above. However, since procelain is an insulator, a much larger expenditure of energy would be required to heat the form and provide proper glove cure. The present invention is a form manufactured of a high temperature thermoplastic which has a higher heat transfer coefficient than porcelain. This allows the form to gain the heat required for curing at a higher rate than procelain. The thermoplastic form requires significantly less energy to heat than a procelain form of the same size and also cools more quickly to aid in removal of the glove.

The glove produced by using the form described above has approximately the inverse shape of the form as shown in FIG. 3. The glove includes a front 48 and a back (not shown) which is substantially a mirror image of the front. Both the front 48 and the back are substantially flat, each having a palm surface 58, five digit surfaces 60 and a periphery 66. Each of the digit surfaces has a base 62 by which it is connected to a palm surface 58 and a tip 64 spaced distally from the palm surface 58. The front 48 and back are connected at their peripheries by a side section, a portion of which is smooth 68 and a portion of which is contoured 70. The contoured portion 70 results from the part of the glove form that has the thinner digit side edges 22 or thinner side peripheral portion 39. The smooth portion 40 results from the part of the glove form that has no reduced cross section.

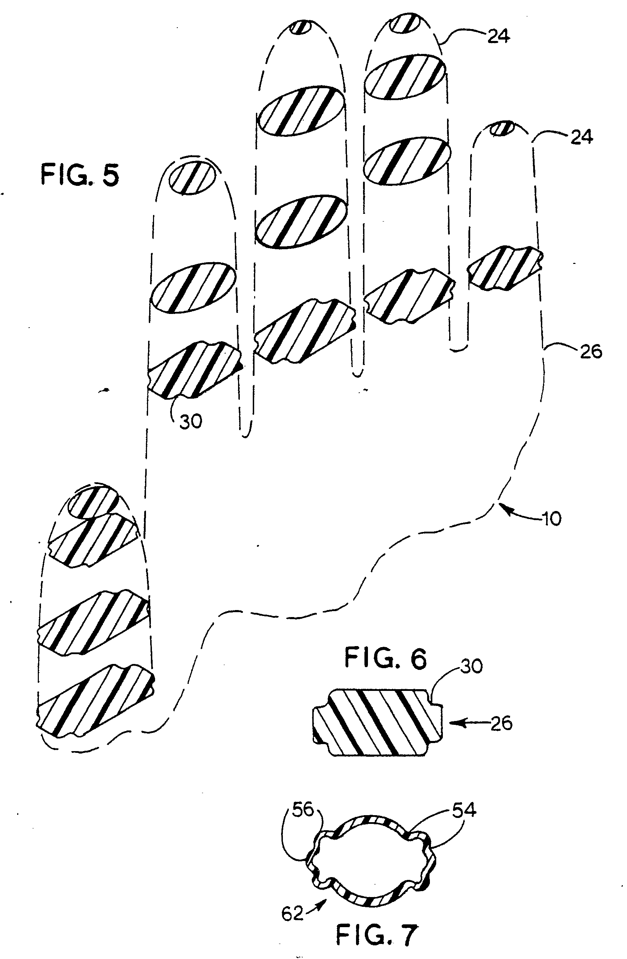

The concave digit channels 30 and side channels 40 of the form become convex portions when the glove is removed from the form and inverted. Thus the glove is flat across the front 48 and back and rounded on the sides of the finger pockets 44 and side edges 52 of the glove. The finger pockets 44 take on a more circular configuration as compared to the flatness of the form 10. This feature may aid in donning the gloves. FIG. 7 shows a close-up view of the cross section of one of the fingers of the glove. The rounded finger pocket sides 44 and rounded side edges 50 are actually comprised of four concave portions 54 alternated with three convex portions 56.

While the invention has particularly been shown and described with reference to a preferred embodiment, it will be understood by those skilled in the art that variation in form, construction and arrangement may be made therein without departing from the spirit and scope of the invention.

**Claims**

1. A glove form comprising:
a palm portion; and
a plurality of digits, each of said palm portion and digits being substantially coplanar, each of said digits having a base and a tip, the base of each of said digits being connected to said palm portion, the tip of each of said digits being located at a distal point from said palm portion, each of said digits having two sides each having a channel adjacent their respective bases.

2. A glove form as claimed in claim 1, wherein the sides of the tip of each of said digits have no channels.

3. A glove form as claimed in claim 1, wherein the base of each of said digits immediately adjacent said palm portion has the approximately shape of a rectangle with a channel in each of the four corners of the rectangle.

4. A glove form as claimed in claim 2, wherein the tip of each of said digits has an approximate elliptical shape.

5. A glove form as claimed in claim 4, additionally comprising a plurality of digit crotches, one digit crotch being positioned between each pair of adjacent digits, each digit crotch being connected to said adjacent digits by a radial surface and being connected to said palm portion by a radial surface.

6. A glove form as claimed In claim 4, said palm portion also comprising two sides, each of said sides comprising a side channel.

7. A glove form as claimed in claim 6, said glove form also comprising a dip line, said glove form being adapted to be submerged in a liquid from the tips of said digits to a predetermined dip line, said dip line being positioned at greater distance from said tips than is the position of said side channel from said tips.

8. A glove form comprising:
a palm portion of a substantially uniform predetermined cross section; and
a plurality of digits of a substantially uniform predetermined cross section substantially the same as the palm portion predetermined cross section, each of said digits having a base and a tip, the base of each of said digits being connected to said palm portion, the tip of each of said digits being located at a distal point from said palm portion, each of said digits having two digit sides of a thinner profile adjacent their respective bases than the predetermined cross section.

9. A glove form as claimed in claim 8, wherein the sides of each of said digit tips have no thinner profile.

10. A glove form as claimed in claim 8, wherein the digit tips have a generally elliptical shape.

11. A glove form as claimed in claim 10, wherein said palm portion additionally comprises two sides, each of said sides having a peripheral portion thinner than the predetermined cross section.

12. A glove form as claimed in claim 11, said glove form being adapted for submerging in a liquid from said digit tips to a predetermined dip line, said predetermined dip line being located at a greater distance from said digit tips than said side peripheral portion is located from said digit tips.

13. A glove form comprising:

a palm portion having a center portion of a substantially uniform predetermined cross section, said palm portion also comprising a side peripheral portion that is thinner than the predetermined cross section; and

a plurality of digits each having a center portion of a substantially uniform predetermined cross section substantially the same as the palm portion predetermined cross section, each of said digits comprising a base and a tip, each digit being connected adjacent said digit base to said palm portion, each digit tip being positioned a distance from said palm portion and having an approximately elliptical cross section, each of said digits having two digit sides, each digit side adjacent a respective base being thinner than said predetermined cross section.

14. A glove form as claimed in claim 13 wherein said palm portion and said plurality of digits are substantially coplanar.

15. A glove form as claimed in claim 14, said glove form being adapted to be submerged in a liquid from said digit tips to a predetermined dip line, said dip line being located a greater distance from said digit tips than said thinner peripheral portion.

16. A glove form as claimed in claim 14 additionally comprising a digit crotch positioned between each pair of adjacent digits, said digit crotch being connected to and being of a thickness approximately equal to the digit side adjacent said base.

# FIG. 1

# FIG. 2

# FIG. 3

# FIG. 4

FIG. 5

24

24

26

30

10

FIG. 6

30

26

56

54

62

FIG. 7

FIG. 8

FIG. 9

FIG. 10

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 135 867 (G.F. STOCKUM) <br> * Column 3, lines 16-54; column 5, lines 29-62; column 6, lines 33-43; claims 1-3; figures 7-12 * <br> --- | 1-16 | B 29 C 41/40 <br> B 29 C 41/14 |
| X | US-A-4 047 251 (G.F. STOCKUM) <br> * Column 4, line 56 - column 5, line 15; figures 7-12 * <br> --- | 1-16 | |
| A | US-A-1 931 324 (E.B. NEWTON) <br> * Page 1, lines 44-49; figure 2 * <br> --- | 1-16 | |
| A | EP-A-0 128 531 (BELTON, DICKINSON AND CO.) <br> * Whole document * <br> ----- | | |
| | | | TECHNICAL FIELDS SEARCHED (Int. Cl.5) |
| | | | B 29 C <br> B 29 D |

The present search report has been drawn up for all claims

| Place of search | Date of completion of the search | Examiner |
|---|---|---|
| THE HAGUE | 10-07-1990 | PHILPOTT G.R. |